# EUROPEAN PATENT APPLICATION

(11) **EP 2 175 136 A1**
(43) Date of publication of application: **14.04.2010**
(21) Application number: 08791029.5
(22) Date of filing: 10.07.2008
(51) Int. Cl.: F04B 39/00, F16J 15/32

(54) **SHAFT SEAL**

(30) Priority: 18.07.2007 JP 2007186817
(71) Applicant: Sanden Corporation, Isesaki-shi Gunma 372-8502 (JP)
(72) Inventor: IIZUKA, Jiro, Isesaki-shi Gunma 372-8502 (JP); FUKUMURO, Takashi, Isesaki-shi Gunma 372-8502 (JP)
(74) Representative: Hofer, Dorothea
(86) International application number: PCT/JP2008/062459
(87) International publication number: WO 2009/011274

(57) **Abstract**

A shaft seal that is in sliding contact with the outer surface of the shaft of an open type compressor or a fluid device driven by an external power source and seals the inside of the compressor or of the fluid device against the outside. At least a sliding section of the shaft seal, which sliding section is in sliding contact with the outer surface of the shaft, is made from a material into which a substance having a melting point in the range of 150 - 300 °C is added and uniformly dispersed. The shaft seal can improve its thermal resistance and abrasion resistance, can exhibit excellent durability, and is particularly suitable for compressors using a carbon dioxide refrigerant which are driven under high-temperature, high-pressure conditions.

## Description

### Technical Field of the Invention

The present invention relates to a shaft seal which seals an inside of a housing against its outside as for a compressor shaft, for example, and specifically relates to a shaft seal which is suitable to be used for a compressor using a refrigerant such as carbon dioxide.

### Background Art of the Invention

A shaft seal which slidably contacts an outer surface of a shaft seal and which seals an inside of a device such as compressor housing against an outside of the device such as an atmosphere side is well known formerly. A sliding contact section of the shaft seal like the above is made of an elastomer such as nitrile rubber, hydrogenated nitrile rubber, fluoro-rubber, EPDM which is a kind of ethylene-propylene rubber, or is made of a synthetic resin such as polyether-ketone resin, polyamide resin, fluoro-resin, tetrafluoroethylene resin, polyphenylene sulfide resin, polyamide resin, polyimide resin, polyvinyl fluoride resin, polyvinylidene fluoride resin, polyvinyl chloride resin, polyvinylidene chloride resin, liquid crystal polymer, polychloro-trifluoro-ethylene resin and polyvinyl alcohol resin. In particular, tetrafluoroethylene resin, which may be called PTFE hereinafter, is used as main constituent of unlubricated sealing materials, is a thermoplastic resin which is excellent in the thermal resistance and the chemical resistance and is used generally because its character is less variable depending on temperature and is durable from extremely low temperature up to high temperature of 260 °C.

However, in compressors using a carbon dioxide refrigerant the temperature of the sliding contact section, depending on the influence ratio of the rotation speed, may be over 200 °C under a high-speed condition and it may be 250 - 300 °C when lacking the lube. Further, when the compressor is a variable displacement type compressor with a swash plate the inner pressure of the crank chamber becomes high pressure around 3 - 4.5 MPa and the surface pressure of the sliding contact surface rises. Therefore, in the compressors using a carbon dioxide refrigerant, the thermal resistance and the abrasion resistance might not be sufficient when the sliding contact section of the shaft seal is made of the above described conventional general resin or rubber materials. In addition, it may be unusable under a high loading or a high temperature because degree of the deformation (creep) by loading is great. Further, in order to improve the abrasion resistance of PTFE, though it is suggested that various additives which are inorganic additives, such as glass fiber, glass bead, carbon fiber, graphite, molybdenum disulfide, bronze, brass, lead oxide and molybdenum, or are organic additives, such as aromatic polyester, polyimide, polyphenylene sulfide and aromatic polyamide, are added in Patent document 1, etc., there has been no suggestion applicable to the shaft seal. Furthermore, there is also a suggestion for promoting the heat radiation from a lip-shaped member of the shaft seal as disclosed in Patent document 2, but the heat radiation from the sliding contact section which is used under the most severe condition might become insufficient.
Patent document 1: JP-3466255
Patent document 2: JP-U-7-23654

### Disclosure of the Invention

### Problems to be solved by the Invention

Therefore an object of the present invention is to provide a shaft seal which can improve the thermal resistance and abrasion resistance of the shaft seal in an open-type compressor or a fluid device and can exhibit an excellent durability, and specifically, to provide a shaft seal suitable for compressors using carbon dioxide refrigerant which is driven under a high temperature or a high pressure condition.

### Means for solving the Problems

To achieve the above-described object, a shaft seal according to the present invention is a shaft seal which is in sliding contact with an outer surface of a shaft of an open type compressor or a fluid device driven by an external power source and seals an inside of the compressor or of the fluid device against an outside thereof, **characterized in that** at least a sliding section of the shaft seal which sliding section is in sliding contact with the outer surface of the shaft is made from a material into which a substance having a melting point in a range of 150 - 300 °C is added and uniformly dispersed. In that structure, though the place where the oil film is not layered between the shaft surface and the sliding contact section as the shaft rotates may cause the increase of heat generation in the sliding contact section therein, because a substance having the melting point within the range of 150 - 300 °C has been added in the sliding contact section, an abnormal overheat can be prevented by the melting heat which is used to melt the additive if the temperature of the sliding contact section exceeds 150 °C. In addition, when a material having a high thermal conductivity is employed as the additive it is possible to perform the heat radiation efficiently from the sliding contact section, so as to improve the heat resistance much more. Furthermore, when a substance to be described is employed as the additive because the formation of the transferred membrane on the shaft surface is promoted the abrasion resistance of the sliding contact section can be improved.

As the material making the above-described sliding contact section any of silicon carbide, graphite, hydrogenated nitrile rubber, nitrile rubber, fluoro-rubber, ethylene-propylene rubber and polyamide can be used as the main constituent material, and a material including tin or bismuth, or tin and bismuth can be used as the additive.

It is preferable for the above-described sliding contact section to be constructed from a lip-shaped flexible member, in particular.

It is preferable that the lip-shaped flexible member as the sliding contact section contacts to be supported by a supporting plate whose thermal conductivity is higher than that of the lip-shaped flexible member, at a position communicating with an outside (for example, an atmosphere side) of a device such as the open-type compressor or the fluid device. In this construction, because the heat radiation from the sliding contact section (lip-shaped flexible member) to outside of the device can be promoted, the fear of overheat of the sliding contact section can be surely dissolved. Therefore, it is preferable that the supporting plate is made of materials, such as an aluminum alloy or a copper alloy, whose thermal conductivities are high.

In the present invention, it is important to radiate efficiently the heat from the sliding contact section to the supporting plate, and further to outside thereof. Therefore it is necessary for the coherence surface width in an axial direction between the supporting plate and the outer circumferential case of the shaft seal to be ensured to some extent in the construction in which the outer circumference of the supporting plate is covered by a outer circumferential case of the shaft seal, for example. This width is preferably set equal to, or more than, a plate thickness of the supporting plate.

In addition, for an efficient heat radiation to the outside from the shaft seal outer circumferential case, it is preferable that one end portion of the shaft seal outer circumferential case is exposed to the outside of the device.

It is preferable that this shaft seal outer circumferential case is constructed as can be inserted into and fixed to a housing of the device.

The shaft seal according to the present invention is applicable as a shaft seal in various fields, and specifically suitable as a shaft seal of an open-type compressor or a fluid device, and is especially suitable for a shaft seal of a compressor using carbon dioxide refrigerant such as a variable displacement swash plate-type compressor of which temperature in the sliding contact section exceeds 200 °C constantly.

### Effect according to the Invention

As for the shaft seal according to the present invention, because the sliding contact section is made of a material where a substance having a melting point within the range of 150 - 300 °C is added and uniformly dispersed, an abnormal overheat of the sliding contact section can be prevented by utilizing the melting heat of the additive, in case that the temperature of the sliding contact section becomes a high temperature over 150 °C. As a result, the heat resistance of the sliding contact section and its abrasion resistance can be improved, so that a shaft seal which can perform an excellent durability can be fulfilled.

### Brief explanation of the drawings

[Fig. 1] Fig. 1 is a vertical sectional view of a compressor to which a shaft seal according to an embodiment of the present invention is applied.
[Fig. 2] Fig. 2 is an enlarged vertical sectional view of the shaft seal section in the compressor depicted in Fig. 1.

### Explanation of symbols

- 1:: variable displacement swash plate-type compressor
- 2:: cylinder bore
- 3:: cylinder block
- 4:: front housing
- 5:: cylinder head
- 6:: valve plate
- 7:: crank chamber
- 8:: drive shaft
- 9:: swash plate
- 10:: rotor
- 11:: connection section
- 12:: pivot pin
- 13:: boss section
- 14:: bearing
- 15:: electromagnetic clutch
- 16:: shaft seal
- 17:: bearing
- 18:: piston
- 19:: shoe
- 20:: suction chamber
- 21:: discharge chamber
- 22:: suction opening
- 23:: suction valve
- 24:: discharge opening
- 25:: discharge valve
- 26:: retainer
- 27:: suction port
- 28:: internal pressure side lip seal
- 28a, 29a:: movable part
- 28b, 28b:: fixed part
- 29:: atmosphere side lip seal
- 30, 31:: supporting plate
- 32:: outer circumferential case of shaft seal
- 33:: snap ring

### The Best mode for carrying out the Invention

Hereinafter, desirable embodiments of a shaft seal according to the present invention will be explained referring to figures.

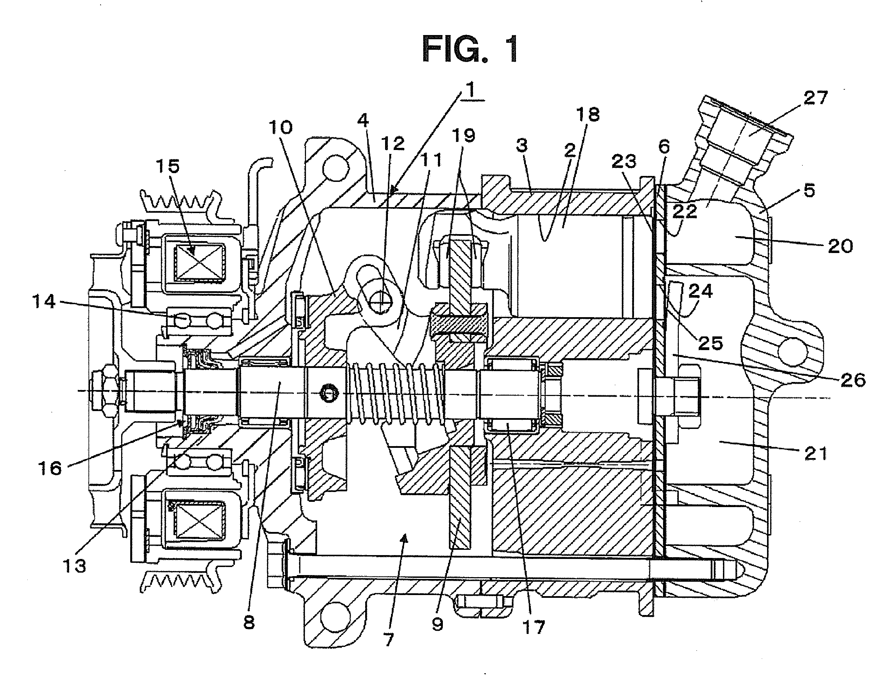

Fig. 1 shows a variable displacement swash plate-type compressor to which a shaft seal according to an embodiment of the present invention is applied. In Fig. 1, symbol 1 shows a variable displacement swash plate-type compressor and compressor 1 in this embodiment is constituted as a compressor using carbon dioxide refrigerant. Compressor 1 has cylinder block 3 in which plural cylinder bores 2 are provided as penetrating in the circumferential direction. Front housing 4 is provided at one end of cylinder block 3, and cylinder head 5 is provided through valve plate 6 at the other end. Drive shaft 8 is provided as extending in crank chamber 7 sectioned by cylinder block 3 and front housing 4. Swash plate 9 shaped like a round plate is provided as being integrally rotatable. Swash plate 9 is pieced as variably tilting on rotor 10 which is firmly fixed to drive shaft 8 through connection section 11 and pivot pin 12.

One end of drive shaft 8 is penetrated into boss section 13 which is projected outward from front housing 4. Electromagnetic clutch 15 is provided around boss section 13 through bearing 14. In addition, the other end of drive shaft 8 is supported by cylinder block 3 through bearing 17.

Shaft seal 16 is provided between drive shaft 8 and boss section 13, so that the inside of crank chamber 7 , which means the inside of the device, is sealed against the outside of the device (atmosphere side), by shaft seal 16.

Piston 18 is reciprocably inserted in cylinder bore 2. A pair of shoes 19 is held at one end of piston 18 and the pair of shoes slidably contacts to both sides of swash plate 9. By this sliding contact, the rotary movement of swash plate 9 is converted into the reciprocation movement of piston 18.

The inside of cylinder head 5 is sectioned into suction chamber 20 and discharge chamber 21. Cylinder bore 2 and suction chamber 20 are communicated through suction opening 22, and suction opening 22 is opened and closed by suction valve 23. In addition, cylinder bore 2 and discharge chamber 21 are communicated through discharge opening 24, and discharge opening 24 is opened and closed by discharge valve 25. The open-ratio of discharge valve 25 into discharge chamber 21 is regulated by retainer 26.

The carbon dioxide refrigerant sucked from suction port 27 into suction chamber 20 is flowed into cylinder bore 2 via suction opening 22. And then, the carbon dioxide refrigerant which has been compressed with the reciprocation movement of piston 18 is discharged via discharge opening 24 into the inside of discharge chamber 21.

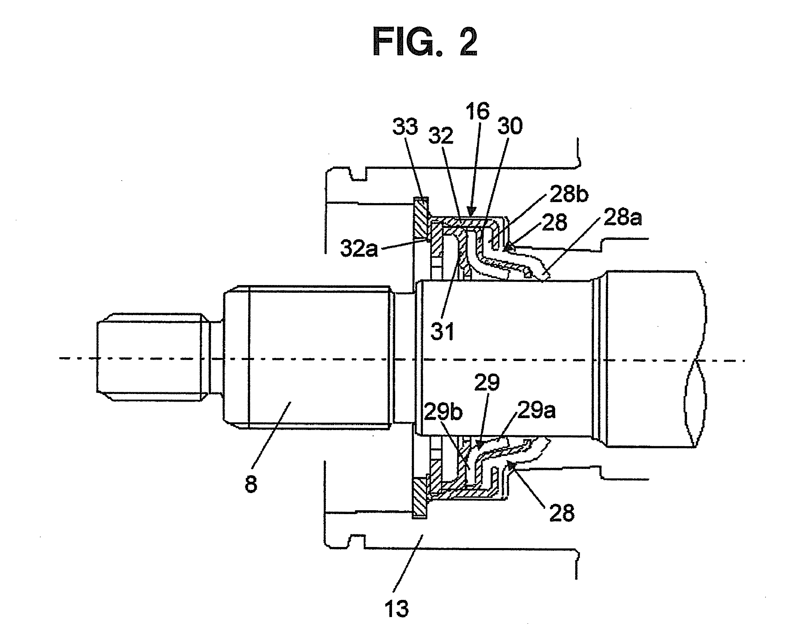

As depicted in Fig. 2, shaft seal 16 has internal pressure side lip seal 28 which slidably contact with the outer surface of drive shaft 8, and also has atmosphere side lip seal 29 (outer side lip seal). Lip seals 28,29, as sliding contact sections, both are made of lip-shaped flexible members. Lip seal 28 has fixed part 28b and movable part 28a which is slidably contacted with the outer surface of drive shaft 8. On the other hand, lip seal 29 has fixed part 29b which is slidably contacted with the outer surface of drive shaft 8, and also has movable part 29a.

Lip seals 28,29 are composed of materials which are made by adding and dispersing uniformly an additive (tin or bismuth, or tin and bismuth) having a melting point in a range of 150-300 °C to any of silicon carbide, graphite, hydrogenated nitrile rubber, nitrile rubber, fluoro-rubber, ethylene propylene rubber and polyamide as a main constituent. Here, in this embodiment the whole lip seals 28,29 are composed of the above-described composite materials, however, it would be sufficient to perform the function and effect of the present invention if at least movable part 28a,29a are composed of the above-described composite materials.

Lip seal 28 is supported in contact with supporting plate 30 at the outer side (the left side in Fig. 2). In addition, movable part 29a of lip seal 29 is constructed as slidably contacting the outer surface of drive shaft 8, and lip seal 29 is supported in contact with supporting plate 31 at the outer side. Supporting plates 30,31 in this embodiment are made of materials, such as aluminum alloy and copper alloy, whose thermal conductivities are higher than that of materials composing lip seal 28,29.

The outer circumferences of supporting plates 30,31 are covered by outer circumferential case 32 of shaft seal. Outer circumferential case 32 of shaft seal is inserted into boss section 13 and fixed therein. Snap ring 33 is provided at the outer side of outer circumferential case of shaft seal 32. In addition, one end 32a of outer circumferential case 32 of shaft seal is exposed toward the outside of compressor 1.

Outer circumferential case 32 of shaft case is made of metal such as iron. In addition, the coherent surface width in the axial direction between outer circumferential case 32 of shaft seal and supporting plate 30(31) is set equal to, or more than, the plate thickness of supporting plate 30(31).

In the compressor shown in Fig. 1, the temperature of movable parts 28a,29a of lip seal 28,29 may be over 200 °C under a high-speed condition, and they may be 250 - 300 °C when lacking the lube. In addition, because compressor 1 is a variable displacement swash plate-type compressor, the pressure inside crank chamber 7 becomes high pressure around 3 - 4.5 MPa and the surface pressures of sliding contact sections 28a,29a rise. Accordingly, superior thermal resistance and rub resistance are required for lip seals 28,29, and specifically for sliding contact section 28a,29a.

However, because substances having melting points in a range of 150 - 300 °C have been added into materials composing lip seals 28,29 in this embodiment, when the temperatures of movable parts 28a,29a of lip seal 28, 29 exceed 150 °C, the additives are melted and its melting heat surely prevents lip seals 28,29 from the abnormal overheat. Further, because a substance such as tin whose thermal conductivity is high is employed as the additive so that lip seals 28,29 can radiate the heat efficiently, the thermal resistance can be much more improved. Furthermore, because tin, etc. is used as the additive, the formation of a transferred membrane on the surface of drive shaft 8 is promoted so that the abrasion resistance of movable parts 28a,29a can be improved.

In addition, because lip seals 28,29 are supported at the outside of the device by contacting supporting plates 30,31 whose thermal conductivities are higher than those of lip seals 28,29, the heat radiation from lip seals 28,29 to the outside can be much more promoted. Therefore, the fear that lip seals 28,29 might be overheated can be surely dissolved.

Further, because the coherent surface width in an axial direction between supporting plate 30(31) and outer circumferential case 32 of shaft seal is set equal to, or more than, a plate thickness of supporting plate 30(31) in the present invention, the heat can be conducted from lip seal 28(29) via supporting plate 30(31) to outer circumferential case 32 of shaft seal efficiently. Furthermore, because one end 32a of outer circumferential case 32 of shaft seal is exposed to the outside of compressor 1, the heat can be radiated from one end 32a to the atmosphere side efficiently.

### Industrial Applications of the Invention

The shaft seal according to the present invention is applicable to a shaft seal in various fields, specifically suitable as a shaft seal of open-type compressors or fluid devices, and chiefly suitable for compressors such as variable displacement swash plate-type compressors which use a carbon dioxide refrigerant and of which sliding contact section temperatures are more than 200 °C constantly.

## Claims

1. A shaft seal which is in sliding contact with an outer surface of a shaft of an open type compressor or a fluid device driven by an external power source and seals an inside of said compressor or of said fluid device against an outside thereof, **characterized in that** at least a sliding section of said shaft seal which sliding section is in sliding contact with said outer surface of said shaft is made from a material into which a substance having a melting point in a range of 150 - 300 °C is added and uniformly dispersed.

2. The shaft seal according to claim 1, wherein said material constituting said sliding section comprises any of silicon carbide, graphite, hydrogenated nitrile rubber, nitrile rubber, fluoro-rubber, ethylene propylene rubber and polyamide as main constituent and said added substance is made of tin or bismuth, or tin and bismuth.

3. The shaft seal according to claim 1, wherein said sliding section comprises a lip-shaped flexible member.

4. The shaft seal according to claim 3, wherein said lip-shaped flexible member is brought into contact with and supported by a supporting plate whose thermal conductivity is higher than that of said lip-shaped flexible member, at a position communicating with an outside of said compressor or said fluid device.

5. The shaft seal according to claim 4, wherein said supporting plate is made of an aluminum alloy or a copper alloy.

6. The shaft seal according to claim 4, wherein a width in an axial direction of a coherence surface between said supporting plate and a shaft seal outer circumferential case of said shaft seal which covers an outer circumference of said supporting plate is set equal to or more than a plate thickness of said supporting plate.

7. The shaft seal according to claim 6, wherein said shaft seal outer circumferential case is made of a metal, and one end portion of said shaft seal outer circumferential case is exposed to an outside of said compressor or said fluid device.

8. The shaft seal according to claim 6, wherein said shaft seal outer circumferential case is inserted into and fixed to a housing of said compressor or said fluid device.

9. The shaft seal according to claim 1, wherein said shaft seal is used as a shaft seal for a shaft of a compressor using a carbon dioxide refrigerant.
